# EUROPEAN PATENT APPLICATION

(11) **EP 3 703 280 A1**
(43) Date of publication of application: **02.09.2020**
(21) Application number: 18870584.2
(22) Date of filing: 19.09.2018
(51) Int. Cl.: H04B 10/27, H04J 14/02

(54) **RESOURCE ALLOCATION DEVICE AND RESOURCE ALLOCATION METHOD**

(30) Priority: 27.10.2017 JP 2017208209
(71) Applicant: NEC Corporation, Tokyo 108-8001 (JP)
(72) Inventor: AIDA Ryuji, Tokyo 108-8001 (JP)
(74) Representative: Vossius & Partner Patentanwälte Rechtsanwälte mbB
(86) International application number: PCT/JP2018/034552
(87) International publication number: WO 2019/082557

(57) **Abstract**

In order to efficiently assign a communication resource of an optical transmission system, a resource allocation device includes a resource calculation unit that derives, based on a communication resource required in a communication between terminal stations opposing via a path, a communication resource required for the path, and calculates, based on a communication resource assignable to the path and the derived communication resource required for the path, a communication resource to be assigned to the path, and an interface that transmits, to a communication device that sets a communication resource to the path, a communication resource to be assigned to the path.

## Description

### Technical Field

The present invention relates to a resource allocation device and a resource allocation method, and particularly, relates to a resource allocation device and a resource allocation method intended to allocate, for each path, a resource for communication between terminals in an optical transmission system.

### Background Art

In a general optical transmission system, a fiber-branch-type branch device, an optical add/drop multiplexing (OADM) branch device, and a selectable OADM branch device have been developed. These devices contribute to a reduction in building cost of an optical transmission system to be commercialized. In the fiber-branch-type branch device, each terminal station is connected via the branch device. The OADM branch device adds/drops an optical signal for each wavelength band, based on setting determined before building of an optical transmission system. The selectable OADM branch device can select, by use of an optical switch, a ratio to be used, from among a plurality of add/drop ratios.

Recently, it has been requested to apply, to an optical transmission system, a reconfigurable OADM (ROADM) branch device that can freely switch an optical path on a wavelength unit, by using a wavelength selective switch. A wavelength selective switch is also referred to as a wavelength selective switch (WSS).

In conjunction with the present invention, PTL 1 describes a band assignment technique of an optical network unit (ONU) in a passive optical network (PON) system. PTL 2 describes a technique of monitoring the number of wavelengths in operation, in an optical transmission system. PTLs 3 and 4 each describe a wavelength assignment technique of an OADM system. PTL 5 describes a setting technique of a pass band of a WSS in a ring network.

### Citation List

### Patent Literature

PTL 1: Japanese Patent No. 6079909
PTL 2: Japanese Unexamined Patent Application Publication No. 2016-072886
PTL 3: Japanese Unexamined Patent Application Publication (Translation of PCT Application) No. 2013-501420
PTL 4: Japanese Unexamined Patent Application Publication No. 2011-097146
PTL 5: Japanese Unexamined Patent Application Publication No. 2010-098544

### Summary of Invention

### Technical Problem

An ROADM branch device using a WSS is capable of switching a path on a wavelength unit, and therefore, capable of flexibly changing an add/drop ratio in response to a change in an assignment requirement of a communication capacity when a service is in operation. On the other hand, a technique for optimizing allocation of a communication resource such as a transmission capacity in an optical transmission system during a long-term operation of the optical transmission system is not established.

### (Object of Invention)

An object of the present invention is to provide a technique of efficiently assigning a communication resource of an optical transmission system.

### Solution to Problem

A resource allocation device of the present invention includes: a resource calculation unit that derives, based on a communication resource required in a communication between terminal stations opposing via a path, a communication resource required for the path, and calculates, based on a communication resource assignable to the path and the derived communication resource required for the path, a communication resource to be assigned to the path; and an interface that transmits, to a communication device that sets a communication resource to the path, a communication resource to be assigned to the path.

A resource allocation method of the present invention includes: deriving, based on a communication resource required in a communication between terminal stations opposing via a path, a communication resource required for the path; and calculating, based on a communication resource assignable to the path and the derived communication resource required for the path, a communication resource to be assigned to the path. Advantageous Effects of Invention

A resource allocation device and a resource allocation method of the present invention provide a technique of efficiently assigning a communication resource of an optical transmission system.

### [Brief Description of Drawings]

Fig. 1 is a block diagram illustrating a configuration example of an optical transmission system 100 according to a first example embodiment.
Fig. 2 is a diagram illustrating an example of logical connection between terminal stations A 101 to D 104.
Fig. 3 is a first diagram describing an example of a procedure of assigning a communication demand to a physical path.
Fig. 4 is a second diagram describing an example of a procedure of assigning a communication demand to a physical path.
Fig. 5 is a third diagram describing an example of a procedure of assigning a communication demand to a physical path.
Fig. 6 is a fourth diagram describing an example of a procedure of assigning a communication demand to a physical path.
Fig. 7 is a fifth diagram describing an example of a procedure of assigning a communication demand to a physical path.
Fig. 8 is a block diagram illustrating a configuration example of an optical transmission system 200 according to a second example embodiment.
Fig. 9 is a flowchart illustrating an example of a procedure of determining the number of wavelengths assigned to a path by an NMS 250.
Fig. 10 is a diagram illustrating a configuration example of an optical transmission system 300 according to a third example embodiment.
Fig. 11 is a diagram illustrating an example of logical connection of terminal stations A 201 to G 207 for each user.
Fig. 12 is a diagram illustrating an example of a required communication resource of a user 1.
Fig. 13 is a diagram illustrating an example of a required communication resource of a user 2.
Fig. 14 is a diagram illustrating an example of a required communication resource of a user 3.
Fig. 15 is a diagram illustrating an example of a required communication resource of a user 4.
Fig. 16 is a diagram describing recalculation of a communication resource.
Fig. 17 is a diagram illustrating a result of assigning a communication resource of a user 1 for each communication demand.
Fig. 18 is a diagram illustrating a result of assigning a communication resource of a user 2 for each communication demand.
Fig. 19 is a diagram illustrating a result of assigning a communication resource of a user 3 for each communication demand.
Fig. 20 is a diagram illustrating a result of assigning a communication resource of a user 4 for each communication demand.
Fig. 21 is a block diagram illustrating a configuration example of an optical transmission system 400 according to a fourth example embodiment.

### Example Embodiment

The following example embodiments each describe a procedure of calculating, in an optical transmission system including a branch device having an ROADM function, a communication resource of a path in such a way that a communication resource of the optical transmission system is utilized with high efficiency, and a device having a function thereof. Calculation of a communication resource is performed when the branch device sets or changes an add/drop ratio, for example.

### (First Example Embodiment)

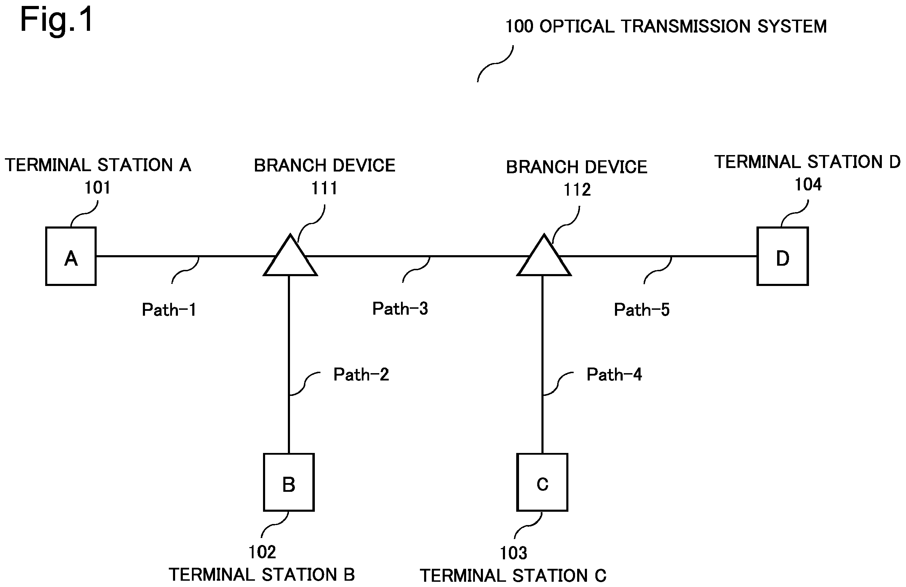

Fig. 1 is a block diagram illustrating a configuration example of an optical transmission system 100 according to a first example embodiment. Fig. 1 illustrates a physical topology of the optical transmission system 100. The optical transmission system 100 includes a terminal station A 101, a terminal station B 102, a terminal station C 103, a terminal station D 104, and branch devices 111 and 112. Each of the terminal stations A 101 to D 104 is an optical transmission device including an optical transponder, and has a function of transmitting and receiving a wavelength division multiplexing (WDM) signal.

A client device or another network may be connected to each of the terminal stations A 101 to D 104. Each of the branch devices 111 and 112 is a communication device including an optical transponder and an ROADM function. Each of the branch devices 111 and 112 relays a WDM signal transmitted and received in the terminal stations A 101 to D 104, and sets a path of the WDM signal for each wavelength. Each of the branch devices 111 and 112 sets, on a wavelength unit, an optical signal to be added/dropped between the branch device and an adjacent device, by a wavelength selective switch (WSS).

A path between the branch device 111 and the terminal station A 101 is referred to as a path-1, a path between the branch device 111 and the terminal station B 102 is referred to as a path-2, and a path between the branch device 111 and the branch device 112 is referred to as a path-3. A path between the branch device 112 and the terminal station C 103 is referred to as a path-4, and a path between the branch device 112 and the terminal station D 104 is referred to as a path-5. An optical fiber transmission path including one or more optical fibers can be used as each of the path-1 to path-5.

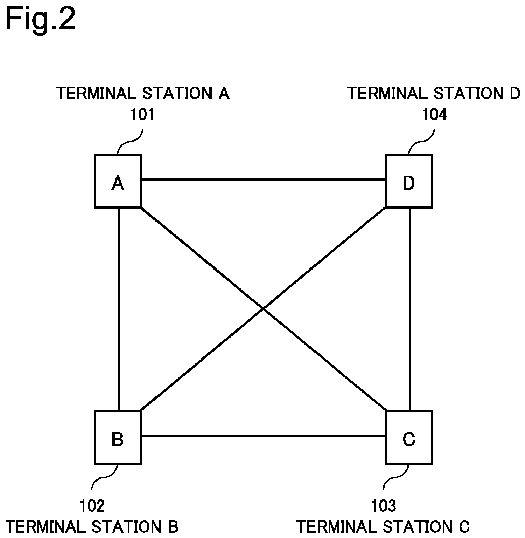

Fig. 2 is a diagram illustrating an example of logical connection between the terminal stations A 101 to D 104 in the optical transmission system 100. In other words, while Fig. 1 illustrates connection between terminal stations based on a physical configuration of the optical transmission system 100, Fig. 2 illustrates a logical connection relation (a logical topology, hereinafter, referred to as a "topology") between terminal stations. Fig. 2 illustrates that there is a case where four terminal stations including the terminal station A 101, the terminal station B 102, the terminal station C 103, and the terminal station D 104 each communicate with the other three terminal stations.

In the following description, a requirement for communication generated between two terminal stations is referred to as a "communication demand". A communication demand includes information on two terminal stations performing communication, and information on a communication resource necessary for connection between the two terminal stations. A communication resource is a parameter necessary for a communication, and is, but not limited to, for example, a transmission speed for each wavelength of a carrier signal included in a WDM signal, or the number of wavelengths. In Fig. 2, a communication between two terminal stations is set for each path by a communication demand.

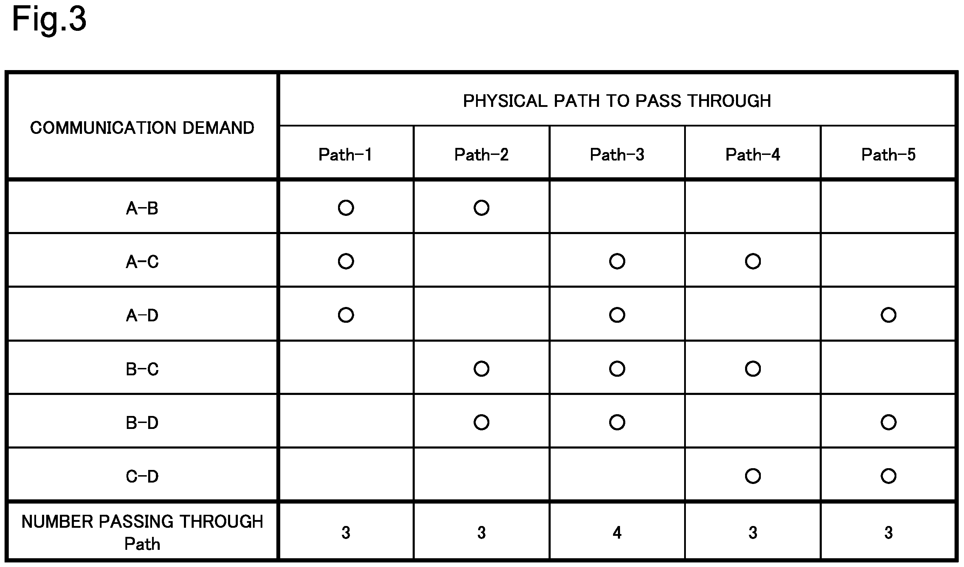

Figs. 3 to 7 are first to fifth diagrams each describing an example of a procedure of assigning a communication demand illustrated in Fig. 2 to a physical path illustrated in Fig. 1. In the present example embodiment, a transmission capacity for each wavelength is 10 gigabit per second [Gbps], and a case where a needed communication resource is illustrated for each path by the number of multiplexed wavelengths is described as an example. Therefore, in the present example embodiment, a communication resource assigned to a communication demand is a communication capacity being proportionate to the number of wavelengths. For example, when a communication resource required by the communication demand in a certain path is 100 Gbps, 10 wavelengths are assigned to the path.

A central processing unit (CPU) included in any one of the terminal stations A 101 to D 104, and the branch devices 111 and 112 may achieve a procedure described below, by executing a program (resource allocation program). The central processing unit is a computer, and notifies each terminal station and each branch device of information on a calculated assignment amount of a communication resource, by multiplexing or superimposing the information on a WDM signal. The terminal station and the branch device that have been notified of an assignment amount of a communication resource each set a communication resource of a subordinate path, based on the notification. Moreover, each branch device sets a wavelength to be added/dropped, by use of an OADM function, in such a way as to enable communication by the assigned communication resource.

In Figs. 3 to 5, a white circular mark is given to the path (physical path) of the optical transmission system 100 through which a communication between the terminal stations passes, for each communication demand between the terminal stations. For example, a communication between the terminal station B 102 and the terminal station C 103 passes through the path-2, the path-3, and the path-4. Therefore, in Fig. 3, a white circular mark is given to a section where a communication demand is present in the row of "B-C", and the column of "Path-2", "Path-3", or "Path-4". For another communication demand as well, a white circular mark is given to the column of a path where a communication passes.

It is assumed that the terminal station and the branch device of the optical transmission system 100 can each accommodate, in a connected path, 100 wavelengths of an optical signal having an optical carrier frequency interval of 50 GHz and a transmission capacity of 10 Gbps. On the other hand, referring to Fig. 3, a physical path having the greatest number of utilized communication demands (i.e., a column having the greatest number of white circles) is the path-3. Thus, when a communication demand is assigned, it is estimated that the number of wavelengths of the path-3 is to become a bottleneck of the communication capacity of the optical transmission system 100. Therefore, the number of wavelengths of each path is assigned first in such a way that a total number of wavelengths of the optical transmission system 100 becomes 100 wavelengths.

In the present example embodiment, it is assumed that a communication demand between the terminal station A 101 and the terminal station C 103 is 100 Gbps (i.e., 10 Gbps × 10 wavelengths), and a communication demand between the terminal station A 101 and the terminal station D 104 is 200 Gbps (i.e., 10 Gbps × 20 wavelengths). Moreover, it is assumed that a communication demand between the terminal station B 102 and the terminal station C 103 is 400 Gbps (40 wavelengths), and a communication demand between the terminal station B 102 and the terminal station D 104 is 300 Gbps (30 wavelengths). Further, it is assumed that no communication demand exists at an initial point between the terminal station A 101 and the terminal station B 102, and between the terminal station C 103 and the terminal station D 104. A required amount of each of the communication resources is an example, and does not limit the example embodiment.

The present example embodiment and the following example embodiments are described assuming that a communication demand, a communication resource assignable to a path, and a communication resource being actually assigned are the same regardless of a communication direction between two terminal stations. For example, when a communication demand between the terminal station A 101 and the terminal station C 103 is 100 Gbps, a communication in a direction from the terminal station A 101 to the terminal station C 103, and a communication in an opposite direction each require a communication resource of 100 Gbps. Moreover, when a communication resource of a path is 10 Gbps per wavelength, the path is capable of a communication of 10 Gbps in both directions. When a communication demand or an assignable communication resource differ depending on a communication direction, a communication resource may be assigned based on a communication demand and a communication resource for each communication direction.

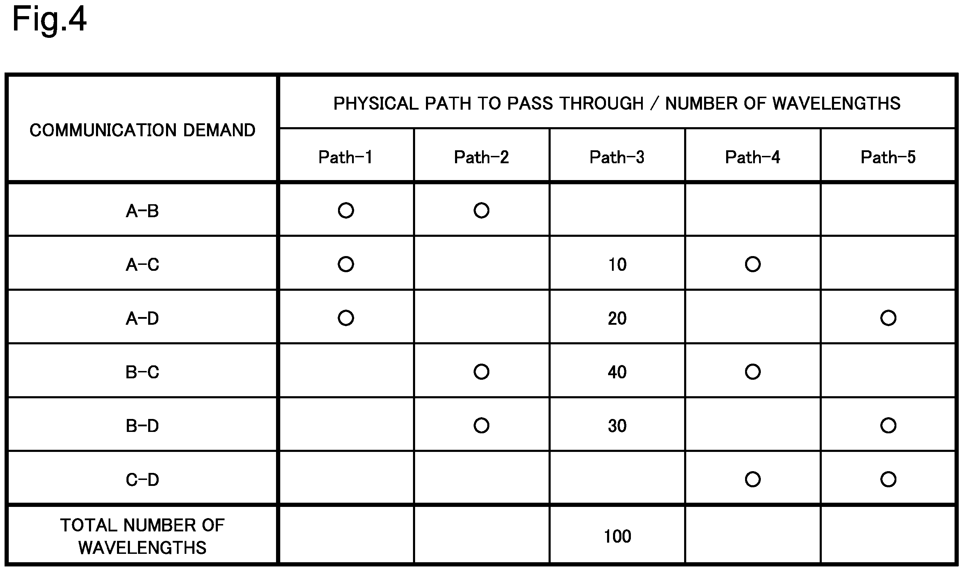

Fig. 4 illustrates an assignment example of the number of wavelengths to the path-3 based on a communication resource included in each of communication demands A-C, A-D, B-C, and B-D. A total number of assignment requirements of wavelengths for the path-3 is 100, and does not exceed a maximum number (100) of wavelengths of the path-3. Therefore, as illustrated in Fig. 4, a communication resource required by each of the communication demands A-C, A-D, B-C, and B-D is assignable to the path-3.

When a total number of wavelengths required by a communication demand in a certain path exceed a communication capacity (100 wavelengths in the present example embodiment) of the path, the number of wavelengths for each communication demand may be proportionately allocated in such a way that a total number of wavelengths assigned to the path becomes equal to or less than 100 wavelengths. Moreover, the assignment of the number of wavelengths may be performed based on not only required amount of a communication resource included in a communication demand, but also a requirement from each of the terminal stations A 101 to D 104, and a past achievement of a communication amount or prediction of a future communication amount between the terminal stations.

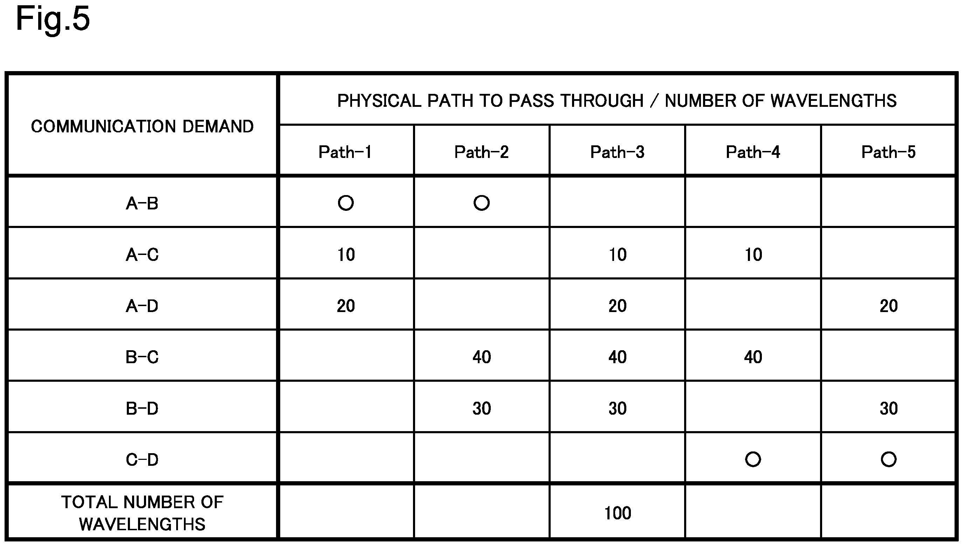

Fig. 5 illustrates an assignment example of the number of wavelengths to a path other than the path-3. When the number of wavelengths of the path-3 to be assigned to communication between certain terminals is determined, the same amount of a communication resource is assigned to another path of the communication between the terminals as well. The number of wavelengths assigned to the path-3 for a communication demand between the terminal station A 101 and the terminal station C 103 (the communication demand A-C) is 10. Therefore, 10 wavelengths are assigned to each of the path-1 and the path-4 as well as the path-3 in order to ensure a communication resource between the terminal station A 101 and the terminal station C 103. Similarly, 20 wavelengths are assigned to each of the path-1 and the path-5 for a communication between the terminal station A 101 and the terminal station D 104. Further, 40 wavelengths are assigned to each of the path-2 and the path-4 for a communication between the terminal station B 102 and the terminal station C 103, and 30 wavelengths are assigned to each of the path-2 and the path-5 for a communication between the terminal station B 102 and the terminal station D 104.

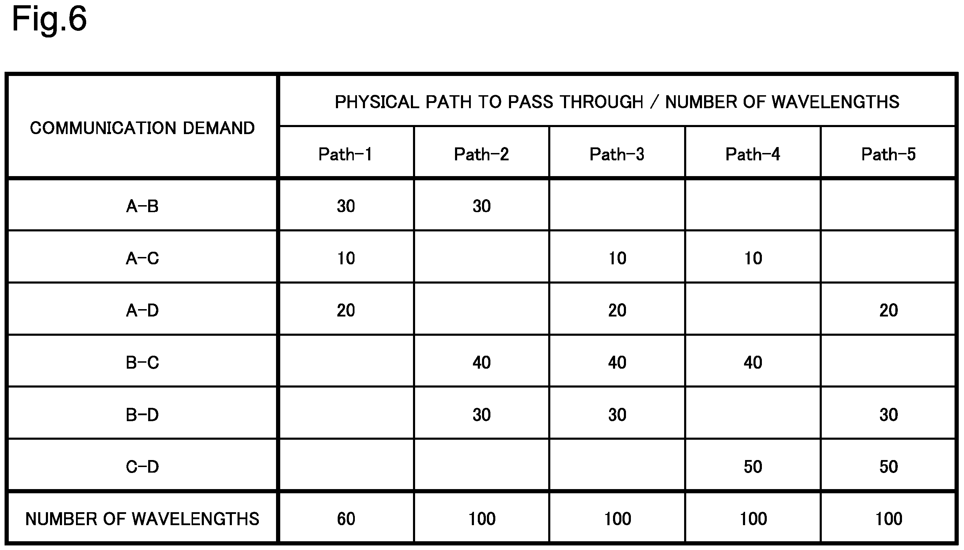

Fig. 6 illustrates an example of wavelength assignment to a communication demand to which the number of wavelengths is not assigned in Fig. 5. In the procedure of Fig. 5, a total of 30 wavelengths are assigned to the path-1, and a total of 70 wavelengths are assigned to the path-2. Since the number of wavelengths assignable to each path is 100, 70 wavelengths are assignable to the path-1, and 30 wavelengths are assignable to the path-2, in relation to a communication demand A-B. In order for a wavelength assignment number in each path for each communication demand to be the same, 30 wavelengths are assigned to each of the path-1 and the path-2 of the communication demand A-B in Fig. 6. Similarly, since 50 wavelengths are already assigned to each of the path-4 and the path-5 in Fig. 5, 50 wavelengths are assigned to each of the path-4 and the path-5 of a communication demand C-D in Fig. 6.

In Fig. 6, a total of 60 wavelengths can only be assigned to the path-1. On the other hand, when a path includes an optical repeater, the number of wavelengths of an input signal to the optical repeater of the path is preferably close to the number of wavelengths of an optical amplifier placed in another path, in order to keep, within a predetermined range, an output level of an optical repeater designed with a standard specification. In other words, the number of wavelengths of each path is preferably as equal as possible.

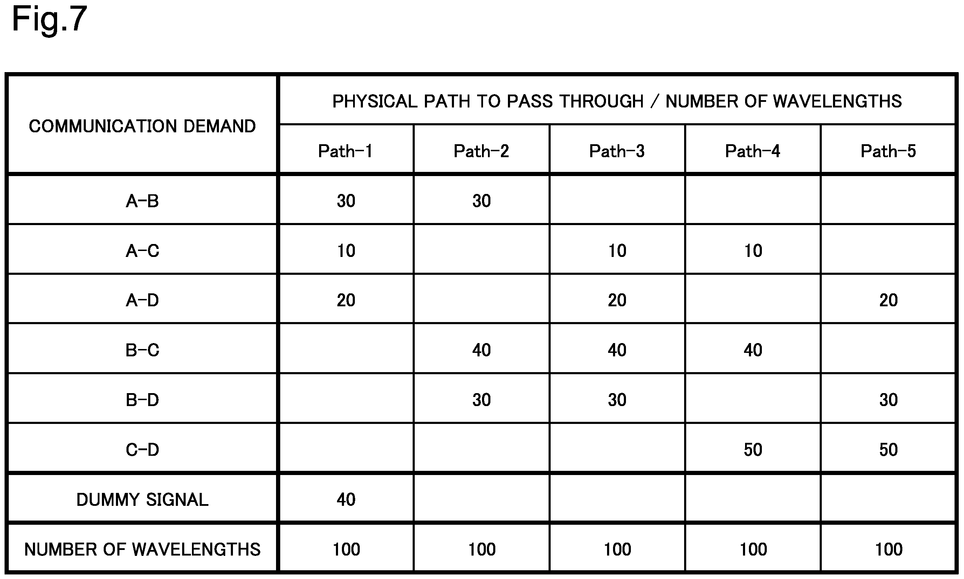

In this way, when the number of wavelengths assigned to the path-1 is less than the number of assignable wavelengths, the terminal station A 101 and the branch device 111 may each generate a dummy signal of 40 wavelengths in such a way that the number of wavelengths of a WDM signal for the path-1 is 100 wavelengths. Fig. 7 illustrates this situation. A dummy signal of 40 wavelengths is an optical signal of a wavelength that is not assigned to the path-1, and does not have data to be transmitted. Accordingly, the number of wavelengths of a WDM signal input to an optical repeater included in the path-1 becomes 100 wavelengths being the same as the number of wavelengths of another path. As a result, an optical amplifier placed in the path-1 can be operated with the same number of wavelengths as that of an optical amplifier used in another path, and therefore, standardization of optical amplifier can be planned in the optical transmission system 100. In any path other than the path-1, a dummy signal can be used, when the number of assigned wavelengths is less than the number of assignable wavelengths. Moreover, no dummy signal may be used in a path including no optical amplifier.

The above-described procedure of having a fixed number of wavelengths in each path can also be performed in a path other than the path-1. The terminal stations A 101 to D 104 and the branch devices 111 and 112 may each transmit a WDM signal in such a way that a total number of wavelengths of each path becomes 100 by increasing and decreasing the number of dummy signals, even when a wavelength assignment number varies due to a change in the content of a communication demand.

As described above, the optical transmission system 100 in the present example embodiment derives, based on a communication resource required in a communication between the terminal stations opposing via a path, a communication resource required for the path. Then, based on a communication resource assignable to the path and the derived communication resource required for the path, the optical transmission system 100 calculates a communication resource to be assigned to the path. As a result, the optical transmission system 100 enables a communication resource of an optical transmission system to be efficiently assigned.

### (Second Example Embodiment)

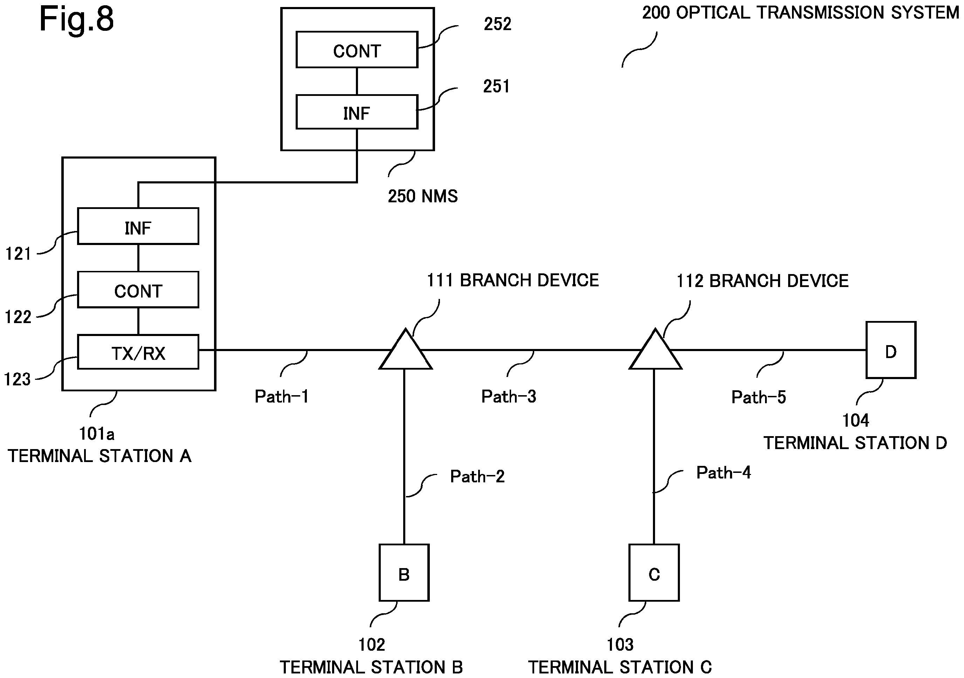

Fig. 8 is a block diagram illustrating a configuration example of an optical transmission system 200 according to a second example embodiment. As compared with the optical transmission system 100 according to the first example embodiment, the optical transmission system 200 is different in including a network management system (NMS) 250 and a terminal station A 101a. The optical transmission system 200 can also be referred to as a resource allocation system.

The NMS 250 is a server device, and is connected in such a way as to be communicable with the terminal station A 101a, a terminal station B 102, a terminal station C 103, a terminal station D 104, and branch devices 111 and 112. In the present example embodiment, the NMS 250 is connected to the terminal station B 102, the terminal station C 103, the terminal station D 104, and the branch devices 111 and 112 via the terminal station A 101a. The NMS 250 can control the terminal station A 101a, and can also control the terminal stations B 102 to D 104 via the optical transmission system 200. For example, the NMS 250 has a function of acquiring a communication demand between terminal stations from outside or inside of the optical transmission system 200.
Moreover, the NMS 250 has a function of setting a communication capacity of a path for each communication demand by the procedure described according to the first example embodiment, for the terminal station A 101a, the terminal station B 102, the terminal station C 103, the terminal station D 104, and the branch devices 111 and 112.

The NMS 250 includes an interface (INF) 251 and a control unit (CONT) 252. The interface 251 is a communication interface with an interface 121 of the terminal station A 101a. The control unit 252 includes a CPU and a memory. The CPU of the control unit 252 performs assignment of a communication resource described below, by executing a resource allocation program stored in the memory.

The terminal station A 101a includes the interface (INF) 121, a control unit (CONT) 122, and an optical transponder (TX/RX) 123. The interface 121 is connected to the interface 251 of the NMS 250. The interface 121 is connected to the interface 251 by, for example, an internet protocol (IP) network, a dedicated line, or a maintenance network.

The control unit 122 connects the interface 121 to the optical transponder 123, and controls the terminal station A 101a, based on a signal received by the interface 121, and a signal received by the optical transponder 123. The optical transponder 123 is an interface with an optical transmission path (a path-1) connected to the branch device 111. In addition to a main signal, a control signal is transmitted and received between the terminal station A 101a and the terminal stations B 102 to D 104. The control signal is used in order to notify, from the terminal station A 101a, another terminal station and a branch device of assignment of a communication resource. The control signal is transmitted by being multiplexed or superimposed on a WDM signal transmitted and received between the terminal station A 101a and another terminal station. For example, the control signal may be transmitted by an optical signal having a wavelength ensured for maintenance. Alternatively, the control signal may be transmitted by performing intensity modulation of partial or entire amplitude of a carrier signal included in a WDM signal.

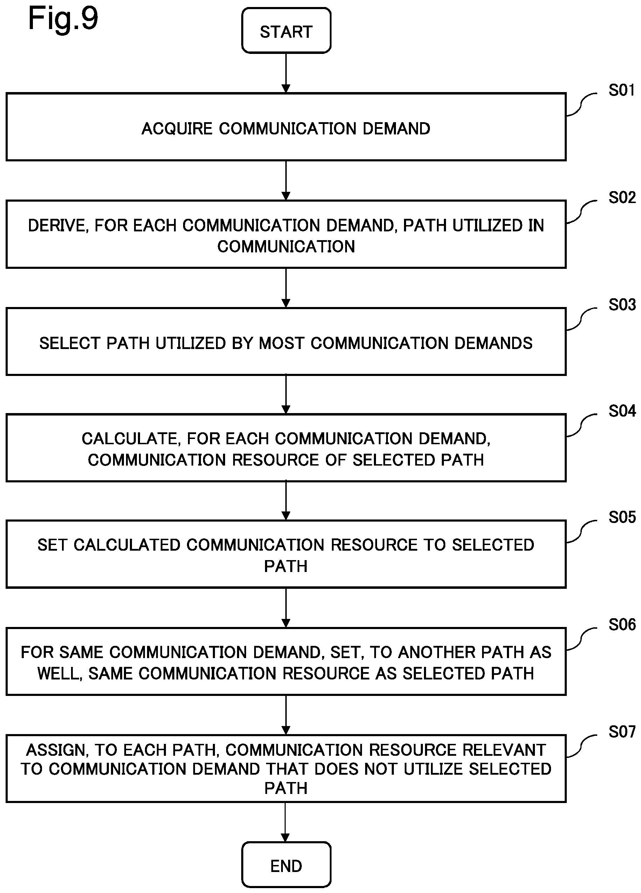

Fig. 9 is a flowchart illustrating an example of a procedure of determining the number of wavelengths assigned to a path by the NMS 250. The NMS 250 acquires a communication demand (step S01 in Fig. 9). The communication demand includes information on both terminal stations performing communication, and information on a communication resource required in the communication. A manager of the optical transmission system 200 may input, as data, a communication demand to the NMS 250 or the terminal stations A 101 to D 104. The NMS 250 may communicate with the terminal stations A 101 to D 104, and collect a communication demand generated or acquired and then held by each terminal station. Further, the NMS 250 may access a database storing a communication demand, and acquire the communication demand from the database. The database is put at a position where the database is communicable with any of devices constituting the optical transmission system 200, or the NMS 250. The NMS 250 may generate a new communication demand by combining a plurality of acquired communication demands.

The NMS 250 derives, for each communication demand, a path utilized in the communication demand (step S02), and selects a path utilized by most communication demands (step S03). Based on a required amount of a communication resource included in a communication demand, the NMS 250 calculates, for each communication demand, a communication resource required for a selected path (step S04). The NMS 250 sets the calculated communication resource to the selected path (step S05). When a sum of calculated communication resources exceeds a communication capacity assignable to a path in step S05, the NMS 250 recalculates, for each communication demand, a communication resource assigned to the path, in such a way that a sum of communication resources in the path becomes equal to or less than the assignable communication capacity.

Furthermore, for the same communication demand, the NMS 250 sets, to another path as well, a communication resource of the same communication capacity as the selected path (step S06). Then, a communication resource of a communication demand that does not utilize the selected path is assigned to each path (step S07). A communication resource of each path is set in such a way that a total of communication resources assigned in step S05 and S06 does not exceed an upper limit of a communication resource utilizable in the path.

The optical transmission system 200 having such a configuration and function can be referred to as a resource allocation system. Moreover, the NMS 250 and a device having an equivalent function can be each referred to as a resource allocation device. The resource allocation device executes a resource allocation method. The control unit 252 serves as a resource calculation means. The resource calculation means derives, based on a communication resource required in a communication between the terminal stations opposing via a path, a communication resource for the path. The resource calculation means further calculates, based on a communication resource assignable to the path and the derived communication resource required for the path, a communication resource to be assigned to the path.

In addition, the function of the control unit 252 may be included in the control unit 122 of the terminal station A 101a. Further, such a function of the terminal station A 101a may be included in any of the terminal stations B 102 to D 104.

### (Modification Examples of First and Second Example Embodiments)

The first and second example embodiments each describe a case where 100 wavelengths of an optical signal of 10 GHz are assignable to each path as a communication resource. However, assignment of a communication resource is not limited thereto, and a communication resource may be assigned to each path by use of a value (an index value of a communication amount) in which another parameter associated with a communication capacity of the path is considered.

For example, when calculating a communication resource for each path based on a communication demand, the number of optical fibers utilizable by the path, the number of wavelengths multiplexable on each optical fiber, and a transmission speed of an optical signal of each wavelength may be independently considered. A communication resource of each path may be set according to a power budget considering a modulation method and an error correction capability of the optical transponders included in each terminal station and each branch device, and a transmission penalty of an optical fiber of a path to be connected. Moreover, a communication resource for each path may include information on presence or absence of a failure for each optical fiber. For example, the number of optical fibers causing a failure may be subtracted from the number of utilizable fibers. A value formed by gathering each of the parameters and then converting each of the parameters into a numerical value may be used as an index value of a communication resource assignable to each path, and a communication resource may be allocated in such a way that a required value of a communication resource based on a communication demand does not exceed the index value of each path.

Alternatively, a communication resource of each path may be calculated by solving an optimization problem most satisfying a communication demand, with, as parameters, the number of optical fibers for each path, the number of wavelengths assignable to each optical fiber, and a transmission speed of each wavelength.

Furthermore, a priority may be set for each communication demand. For example, when a sum of communication resources required in a certain path exceeds a communication resource utilizable by the path, the sum of communication resources may be decreased by reducing communication resources assigned to a communication demand of a lower priority order. Alternatively, communication resources may be proportionately allocated by use of a parameter proportionate to a degree of priority, based on a value of the parameter.

In addition, when a user or an application utilizing communication differs, even with a communication demand linking the same terminals, differing communication demands may be used between the same terminals. By generating a communication demand for each user or application, a communication capacity or priority differing for each user or application can be set. As a result, setting of a communication resource based on a detailed service level becomes possible.

### (Third Example Embodiment)

A third example embodiment describes an allocation example of a communication resource when a plurality of users shares a physical network.

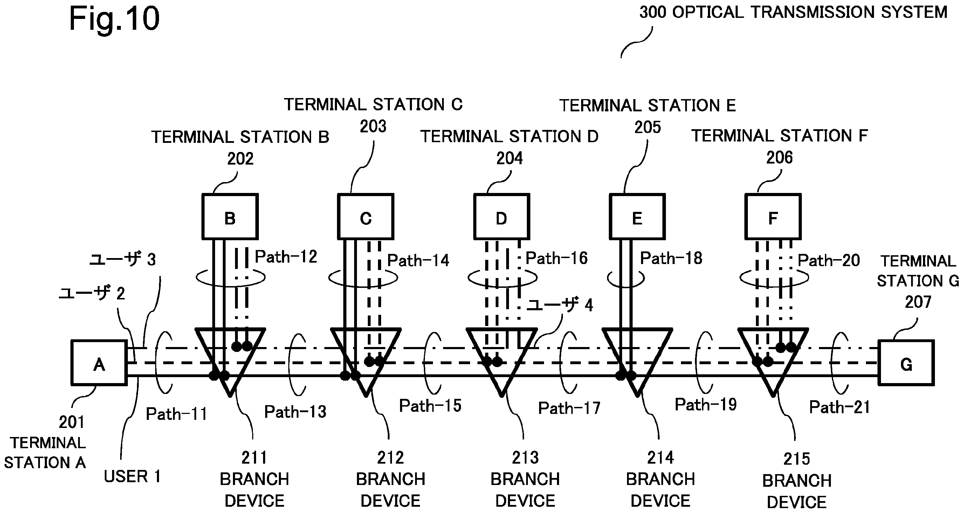

Fig. 10 is a diagram illustrating a configuration example of an optical transmission system 300 according to the third example embodiment. The optical transmission system 300 includes a terminal station A 201, a terminal station B 202, a terminal station C 203, a terminal station D 204, a terminal station E205, a terminal station F 206, and a terminal station G 207. The optical transmission system 300 further includes branch devices 211 to 215. Each of the terminal stations A 201 to G 207 is an optical transmission device, and includes an optical transponder that transmits and receives a WDM signal between the optical transponder and a connected branch device. Each of the branch devices 211 to 215 is a branch device including an optical transponder and an ROADM function, and transmits and receives a WDM signal between an adjacent terminal station and a branch device. As illustrated in Fig. 10, paths (a path-11 to a path-21) connect the terminal stations A 201 to G 207 to branch devices, and connect the branch devices to one another. The optical transmission system 300 may include an NMS 250 described in the second example embodiment. In this case, at least one of the terminal stations A 201 to G 207 has a function and a configuration similar to those of a terminal station A 101a according to the second example embodiment, and is connected to the NMS 250.

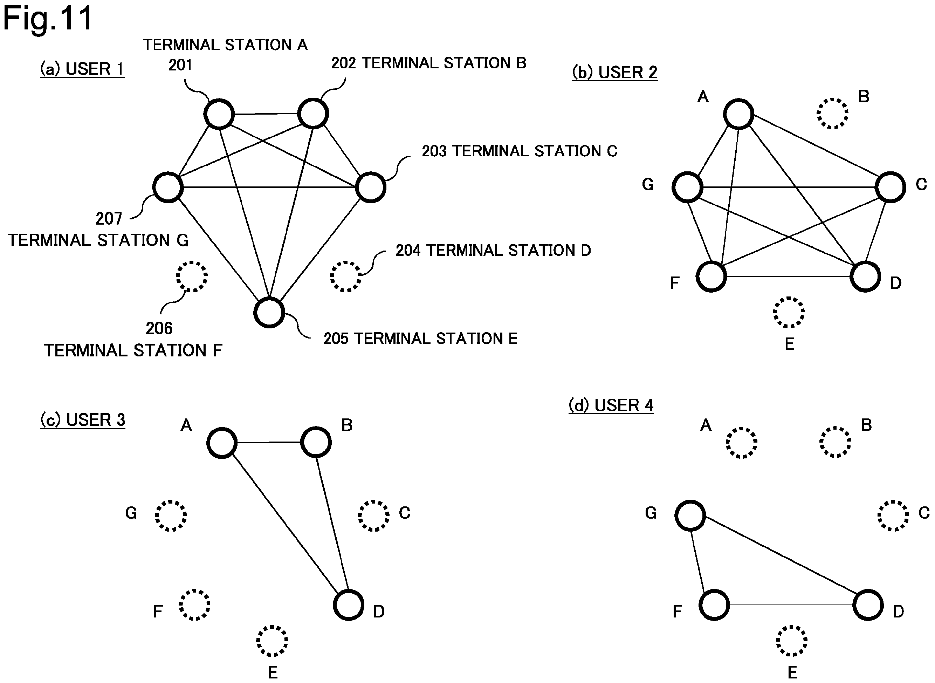

Fig. 11 is a diagram illustrating an example of a logical connection relation (topology) of the terminal stations A 201 to G 207 for each user in the optical transmission system 300. A to G of users 2, 3, and 4 in Fig. 11 are relevant to the terminal stations A 201 to G 207 of a user 1. Fig. 11 illustrates that a combination of terminal stations performing communication differs among the users 1 to 4. A topology is independently set for each user, and a topology of a certain user does not affect a topology of another user. The user 1 utilizes a communication interconnecting the terminal station A 201, the terminal station B 202, the terminal station C 203, the terminal station E205, and the terminal station G 207. The user 2 utilizes a communication interconnecting the terminal station A 201, the terminal station C 203, the terminal station D 204, the terminal station F 206, and the terminal station G 207. The user 3 utilizes a communication interconnecting the terminal station A 201, the terminal station B 202, and the terminal station D 204. The user 4 utilizes a communication interconnecting the terminal station D 204, the terminal station F 206, and the terminal station G 207.

Assignment of a communication resource to the path-11 to the path-21 when the users 1 to 4 having topologies illustrated in Fig. 11 simultaneously use the optical transmission system 300 in Fig. 10 is described. In the present example embodiment, first, a procedure of assigning a needed communication resource to each path is executed for each user, according to the procedure described in the first example embodiment. Then, a total of all the users of a needed communication resource is derived for each path, and an assignment amount of a communication resource is calculated in such a way that a communication resource for each path does not exceed a communication capacity of the path.

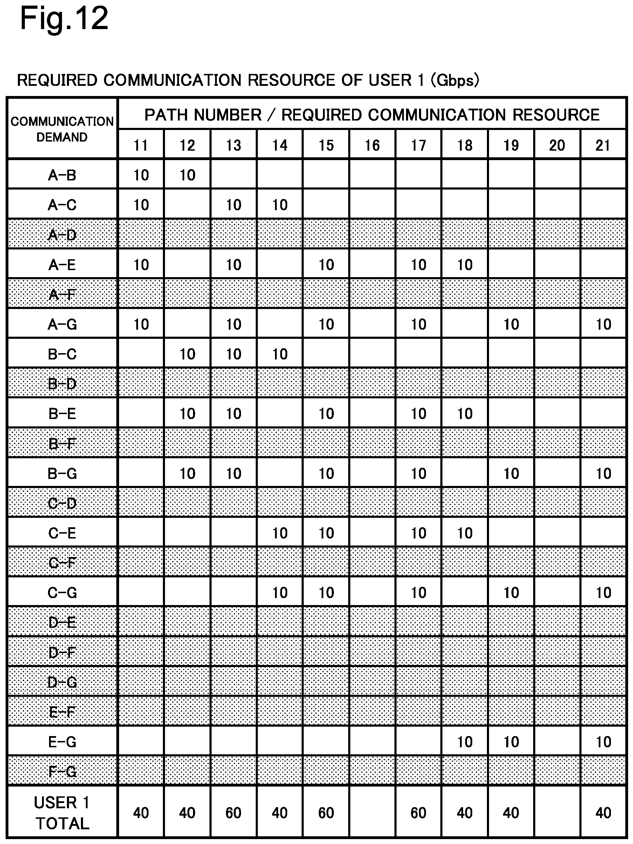

Each of Figs. 12 to 15 is a diagram illustrating an example of a communication resource required based on a communication demand for each user. A numerical value in each of Figs. 12 to 15 is a communication resource required for each path, and a unit is a communication capacity represented by Gbps in the present example embodiment. The present example embodiment describes, as an example, a case where a communication demand of each of the users 1 and 2 requires a communication resource of 10 Gbps between all terminals. It is assumed that a communication resource required by a communication demand of the user 3 is 20 Gbps in communication between all terminals, and a communication resource required by a communication demand of the user 4 is 15 Gbps in communication between all terminals. Moreover, in the present example embodiment, it is assumed that a communication resource assignable to each path is 120 Gbps. However, a communication capacity relevant to a communication resource of a path may differ for each communication demand. Further, a communication resource assignable to a path may differ for each path.

Fig. 12 is a diagram illustrating an example of a required communication resource of the user 1. Since the user 1 interconnects the terminal station A 201, the terminal station B 202, the terminal station C 203, the terminal station E205, and the terminal station G 207, "10" (Gbps) is described in a row of relevant connection. For example, since paths linking a terminal station A and a terminal station C are the paths-11, 13, and 14, "10" is entered in the columns of "11", "13", and "14" of rows "A-C". A row of a combination of terminal stations performing no communication is indicated by hatching.

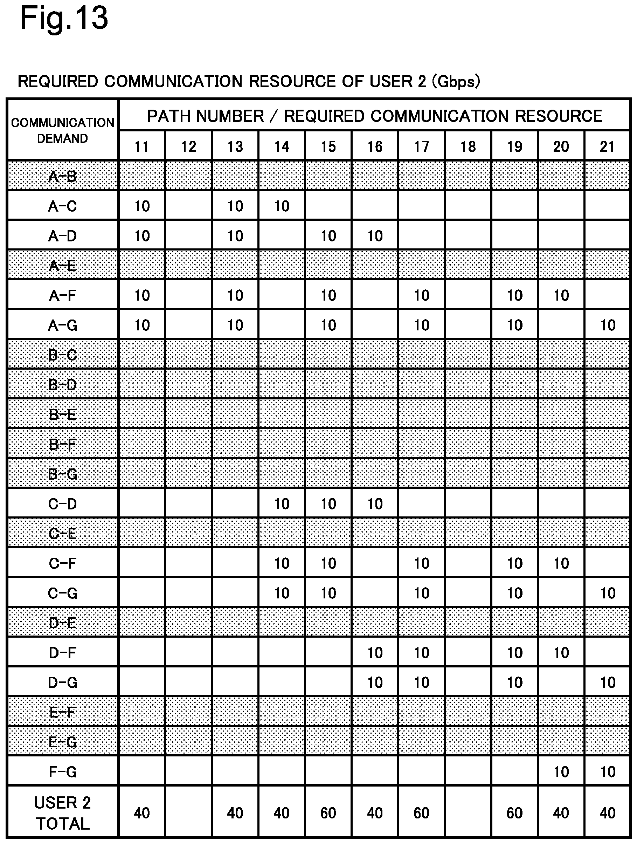

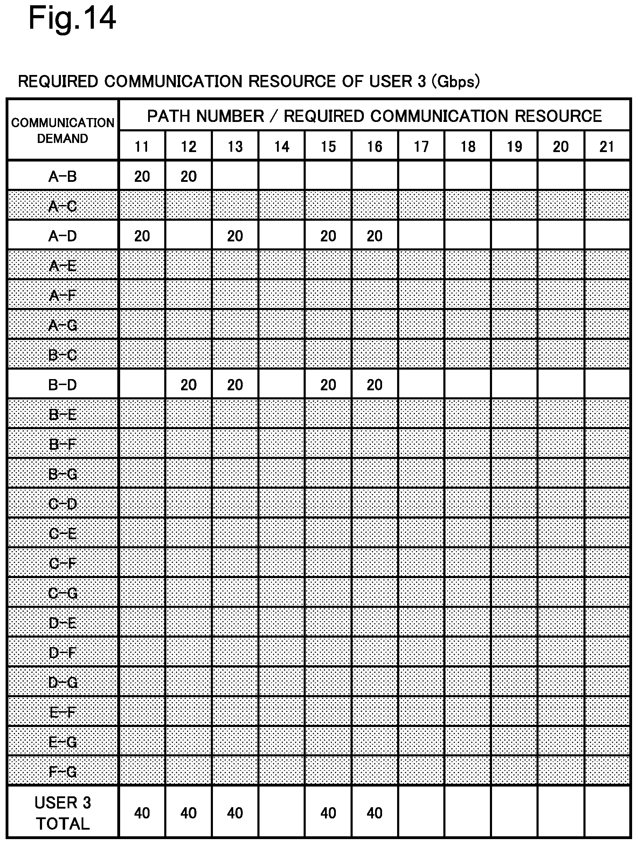

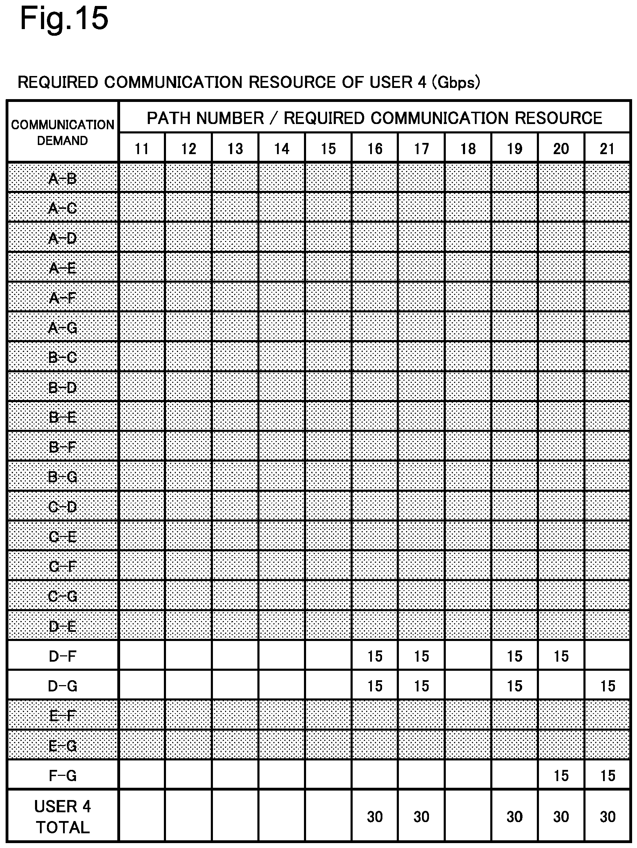

Fig. 13 is a diagram illustrating an example of a required communication resource of the user 2. Since the user 2 interconnects the terminal station A 201, the terminal station C 203, the terminal station D 204, the terminal station F 206, and the terminal station G 207, "10" (Gbps) is described in a row of relevant connection in Fig. 13. For the user 3, in Fig. 14, a communication resource needed for communication between the connected terminal stations is described as "20" (Gbps). For the user 4, in Fig. 15, a communication resource needed for communication between the connected terminal stations is described as "15" (Gbps). A total of communication resources required by each user for each path is indicated in the lowermost row of each of Figs. 12 to 15.

In each of Figs. 12 to 15, a total of communication resources by each user for each path does not exceed 120 Gbps being a maximum transmission capacity of a path. Thus, reassignment of a communication resource described below can be performed by using a required value in each of Figs. 12 to 15 as it is. However, when there is a user having a communication resource exceeding 120 Gbps, recalculation of a communication resource may be previously performed in the user according to a procedure described in each of the first and second example embodiments.

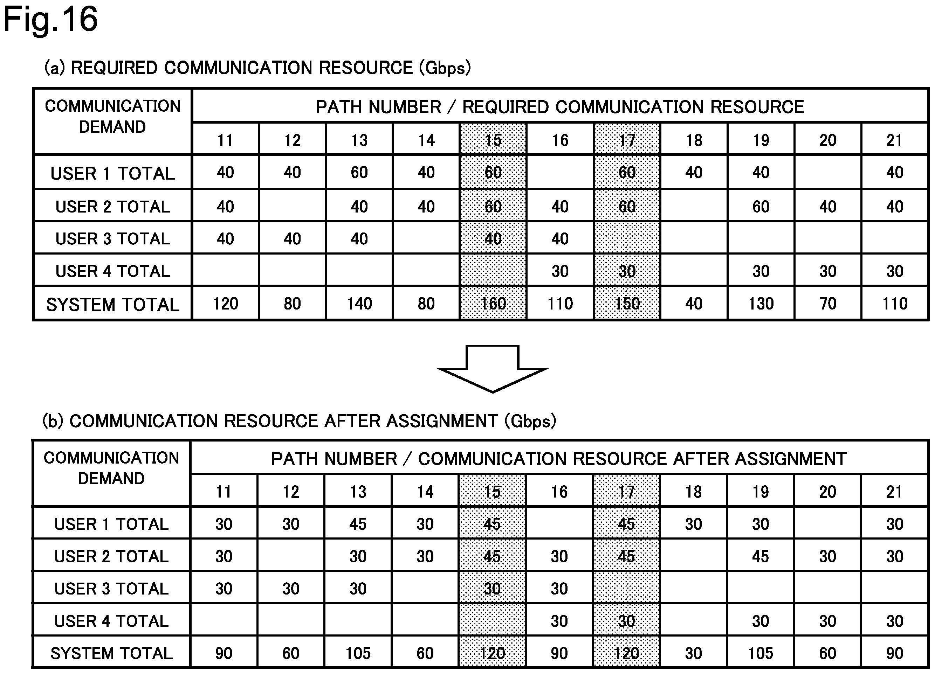

Fig. 16 is a diagram describing recalculation of a communication resource. In an upper diagram (a) of Fig. 16, a value of a communication resource described at the lowermost stage in each of Figs. 12 to 15 is transferred, and a communication resource required by an optical transmission system 200 is described in the row of "system total". Required transfer capacities for the paths-13, 15, 17 and 19 are 140 Gbps, 160 Gbps, 150 Gbps, and 130 Gbps, respectively. Since a maximum transmission capacity of each path is 120 Gbps, a required transfer capacity for the above-described path exceeds an assignable capacity. Thus, in the present example embodiment, in order that a communication resource assigned to the path-15 having the greatest required transfer capacity may become 120 Gbps, recalculation is performed in such a way as to reduce, to 120÷160 = 3/4 times, a communication resource assigned to each of the users 1 to 3 using the path-15. A communication resource reduced by the recalculation is assigned as a total value of a communication resource of each user.

A lower diagram (b) of Fig. 16 indicates a total value of a communication resource of each user for each path after assignment. In the present example embodiment, a communication resource assigned to each of the users 1 to 3 is reduced to 3/4 times by recalculation, and therefore, in the lower diagram, a numerical value of each of the users 1 to 3 becomes 3/4 of the numerical value in the upper diagram. As a result, an assignment amount of a communication resource of the path-15 becomes 120 Gbps, and an assignment amount of a communication resource of the path-17 also becomes 120 Gbps. Since an assignment amount to another path is also equal to or less than 120 Gbps, a communication resource is assigned to a path of each user, based on the lower diagram (b) of Fig. 16. Since the user 4 does not utilize the path-15, a total of assignment amounts of a communication resource for each path remains at 30 Gbps.

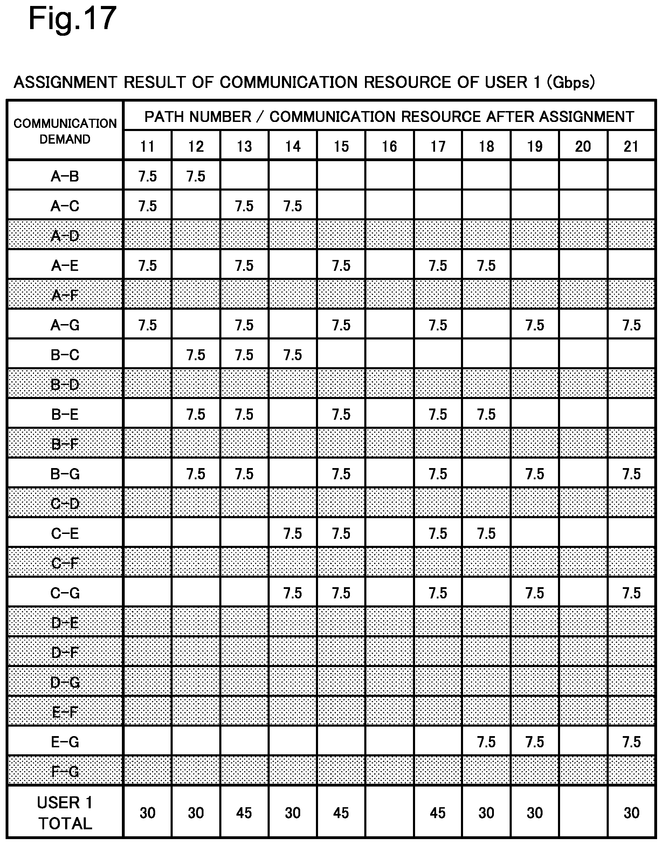

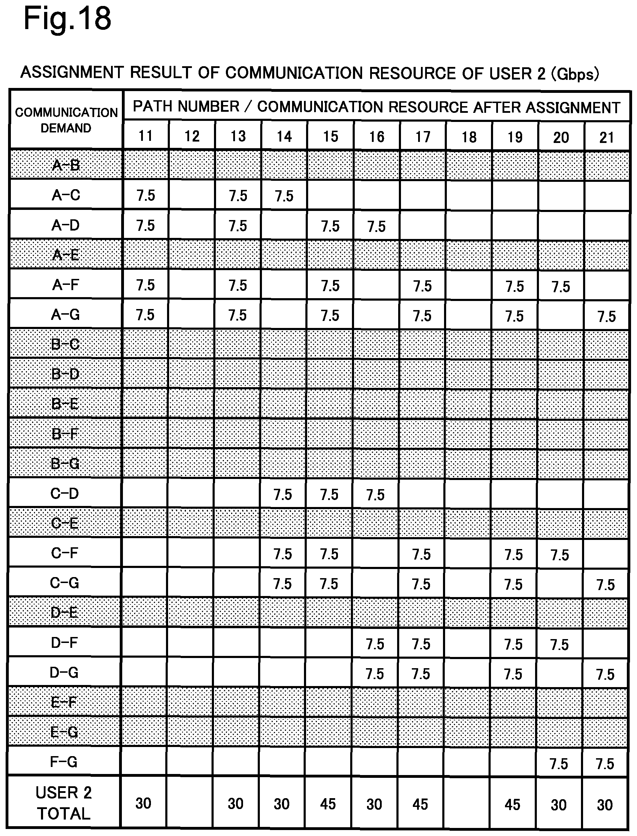

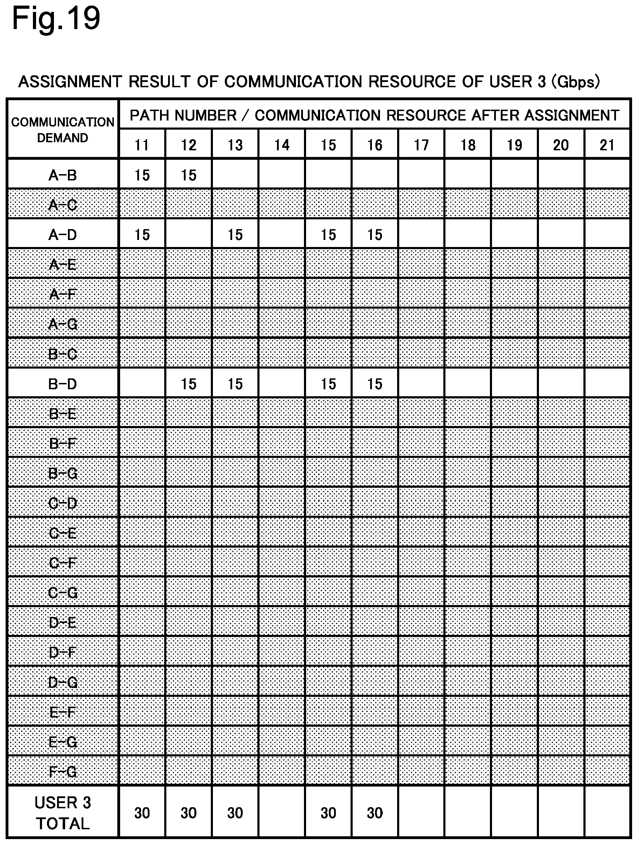

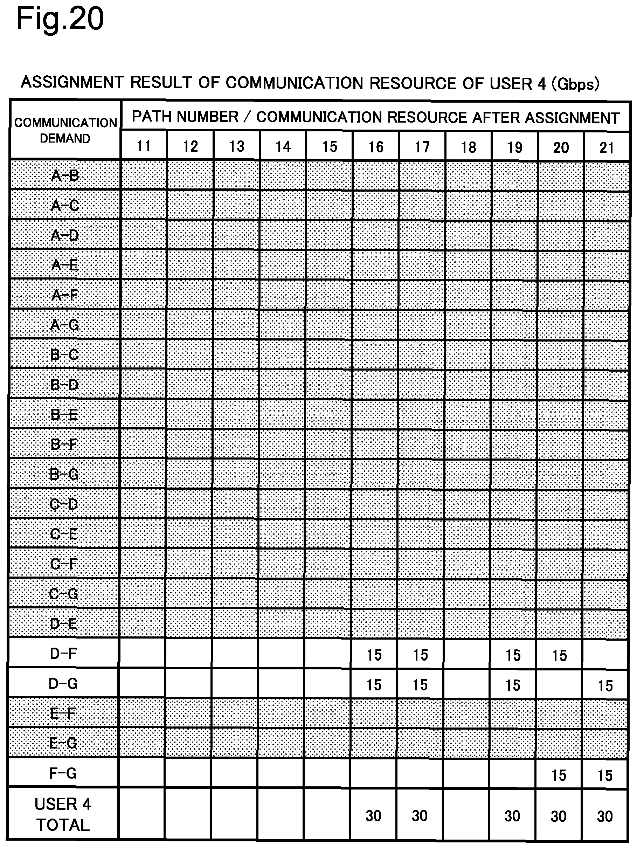

Each of Figs. 17 to 20 is a diagram illustrating a result of assigning a communication resource of each user for each communication demand, based on the lower diagram (b) of Fig. 16. An assignment amount to each of the users 1 to 3 illustrated in Figs. 17 to 19 is 3/4 times as compared with that in each of Figs. 12 to 14. An assignment amount to the user 4 illustrated in Fig. 20 is similar to that in Fig. 15.

As described above, in the optical transmission system 300 according to the third example embodiment, even when topologies of users overlap, a communication resource of each path is calculated in such a way that a total of communication resources for each user does not exceed a communication capacity assignable to the path. As a result, the optical transmission system 300 according to the third example embodiment also enables a communication resource of an optical transmission system to be efficiently assigned.

### (Fourth Example Embodiment)

The third example embodiment describes a configuration in which terminal stations A 201 to G 207 are connected to linearly connected branch devices 211 to 215. An optical transmission system having such a configuration may be applied to, for example, a submarine cable system in which each terminal station is installed on land, and each branch device is installed on seabed. However, a connection form of a branch device is not limited thereto.

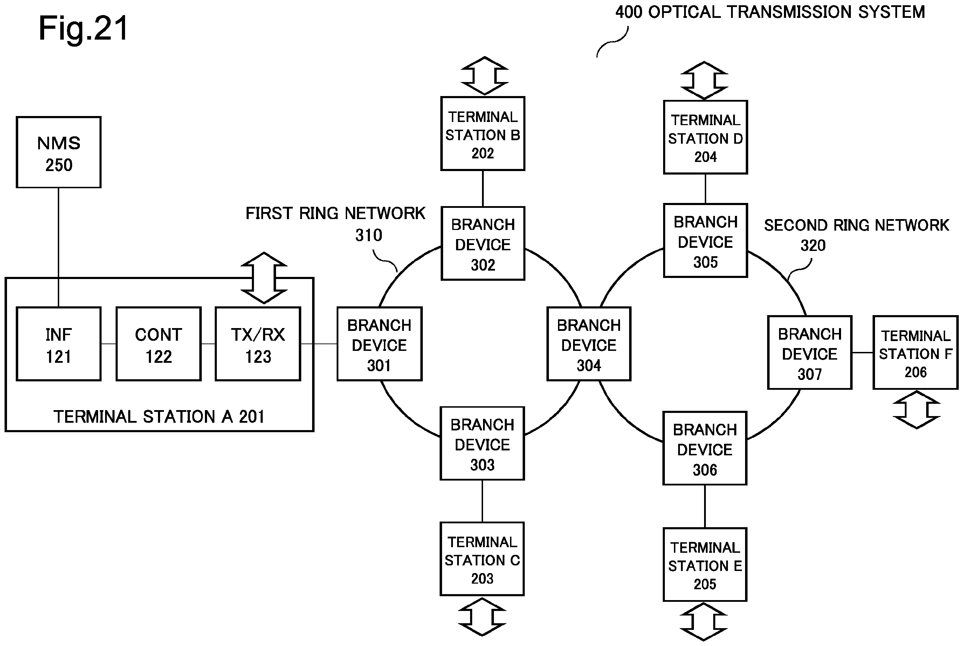

Fig. 21 is a block diagram illustrating a configuration example of an optical transmission system 400 according to a fourth example embodiment.

Branch devices 301 to 304 form a first ring network 310, and branch devices 304 to 307 form a second ring network 320. The branch device 304 belongs to both the first and second ring networks. An optical transmission system having such a configuration may be applied to, for example, a land optical transmission system.

Each of the branch devices 301 to 307 is an ROADM device including an optical transponder. In Fig. 21, one terminal station (terminal stations A 201 to F 206) is connected to each of the branch devices 301 to 303 and the branch devices 305 to 307. A client device or another network may be connected to each of the terminal stations A 201 to F 206. Each of the branch devices 301 to 307 may connect a plurality of terminal stations. In Fig. 21, an NMS 250 is connected to the terminal station A 201. The terminal station A 201 includes an interface 121, a control unit 122, and an optical transponder 123 similar to those of a terminal station A 101a according to the second example embodiment.

As in the second example embodiment, the NMS 250 calculates, based on a communication demand between terminal stations, a communication resource assigned to a path between a terminal station and a branch device, and a path between branch devices. The NMS 250 notifies the terminal stations A 201 to F 206 and the branch devices 301 to 307 of the calculated communication resource. The terminal stations A 201 to F 206 and the branch devices 301 to 307 each set, to each path, the communication resource notified from the NMS 250.

In the optical transmission system 400 as well as in the optical transmission system 300 according to the third example embodiment, a communication demand may be generated for each user, based on a logical topology for each user. In this case, a communication resource for each path is set in such a way that a sum of required amounts of communication resources in each path based on a communication demand for each user does not exceed a communication capacity assignable to each path.

In other words, similarly to the third example embodiment, the optical transmission system 400 according to the fourth example embodiment enables efficient assignment of a communication resource of an optical transmission system, by calculating, based on a communication demand for each user, a communication resource assigned to the path.

When a program is used in each of the above-described example embodiments, the program is recorded in a fixed non-transitory recording medium. Although a semiconductor memory or a hard disk drive is used as a recording medium, a recording medium is not limited thereto. Example embodiments of the present invention may be also described as, but are not limited to, the following supplementary notes.

### (Supplementary note 1)

A resource allocation device including:
a resource calculation means for deriving, based on a communication resource required in a communication between terminal stations opposing via a path, a communication resource required for the path, and calculating, based on a communication resource assignable to the path and a communication resource required for the derived path, a communication resource to be assigned to the path; and
an interface that transmits, to a communication device that sets a communication resource to the path, a communication resource to be assigned to the path.

### (Supplementary note 2)

The resource allocation device according to supplementary note 1, wherein the resource calculation means calculates a communication resource to be assigned to each path between adjacent communication devices, among the terminal stations and the communication devices.

### (Supplementary note 3)

The resource allocation device according to supplementary note 1 or 2, wherein the resource calculation means derives, for each pair of the opposing terminal stations, a communication resource to be assigned to the path.

### (Supplementary note 4)

The resource allocation device according to supplementary note 3, wherein the resource calculation means calculates, in a path in which a sum of communication resources to be assigned to the path derived for each pair of the opposing terminal stations is largest, a communication resource to be assigned to a path in which a sum of communication resources to be assigned to the path is largest, based on a communication resource required for the path and a communication resource assignable to the path.

### (Supplementary note 5)

The resource allocation device according to supplementary note 3 or 4, wherein the resource calculation means assigns, for each pair of the opposing terminal stations, the same communication resource to all paths via which the communication passes.

### (Supplementary note 6)

The resource allocation device according to any one of supplementary notes 1 to 5, wherein, when a communication resource assigned to one path is less than a communication resource assignable to the one path, the resource calculation means assigns a dummy signal to the one path.

### (Supplementary note 7)

The resource allocation device according to any one of supplementary notes 1 to 6, wherein the resource calculation means assigns, for each logical topology indicating a connection relation of the terminal stations, a communication resource of a path via which a communication between the terminal stations passes, and
assigns the communication resource in such a way that a sum, for each of the paths, of amounts of the communication resources assigned for the each logical topology does not exceed an amount of a communication resource assignable to the path.

### (Supplementary note 8)

A resource allocation system including:
a plurality of terminal stations;
the resource allocation device according to any one of supplementary notes 1 to 7, being connected to at least one of the plurality of terminal stations; and
a communication device that sets a communication resource to a path between the terminal stations.

### (Supplementary note 9)

A resource allocation method including:
deriving, based on a communication resource required in a communication between terminal stations opposing via a path, a communication resource required for the path; and
calculating, based on a communication resource assignable to the path and the derived communication resource required for the path, a communication resource to be assigned to the path.

### (Supplementary note 10)

The resource allocation method according to supplementary note 9, further including calculating a communication resource to be assigned to the path, for each path between a communication device and the terminal station adjacent to each other, among the communication devices that set a communication resource to the path, and the terminal stations.

### (Supplementary note 11)

The resource allocation method according to supplementary note 9 or 10, further including deriving, for each pair of the opposing terminal stations, a communication resource to be assigned to the path.

### (Supplementary note 12)

The resource allocation method according to supplementary note 11, further including calculating, in a path in which a sum of communication resources to be assigned to the path derived for each pair of the opposing terminal stations is largest, a communication resource to be assigned to a path in which a sum of communication resources to be assigned to the path is largest, based on a communication resource required for the path and a communication resource assignable to the path.

### (Supplementary note 13)

The resource allocation method according to supplementary note 11 or 12, further including assigning, for each pair of the opposing terminal stations, the same communication resource to all paths via which the communication passes.

### (Supplementary note 14)

A resource allocation program causing a computer of a resource allocation device to execute:
a procedure of deriving, based on a communication resource required in a communication between terminal stations opposing via a path, a communication resource required for the path;
a procedure of calculating, based on a communication resource assignable to the path and the derived communication resource required for the path, a communication resource to be assigned to the path; and
a procedure of transmitting, to a communication device that sets a communication resource to the path, a communication resource to be assigned to the path.

While the invention has been particularly shown and described with reference to exemplary embodiments thereof, the invention is not limited to these embodiments. It will be understood by those of ordinary skill in the art that various changes in form and details may be made therein without departing from the spirit and scope of the present invention as defined by the claims.

Furthermore, a configuration described in each example embodiment is not necessarily exclusive to one another. An action and an advantageous effect of the present invention may be achieved by a configuration combining all or some of the above-described example embodiments.

This application is based upon and claims the benefit of priority from Japanese patent application No. 2017-208209, filed on October 27, 2017, the disclosure of which is incorporated herein in its entirety by reference.

### Reference signs List

- 100: Optical transmission system
- 101 to 104: Terminal stations A to D
- 101a: Terminal station A
- 111, 112: Branch device
- 121: Interface
- 122: Control unit
- 123: Optical transponder
- 200: Optical transmission system
- 201 to 207: Terminal stations A to G
- 211 to 215: Branch device
- 250: Network management device
- 251: Interface
- 252: Control unit
- 300: Optical transmission system
- 301 to 307: Branch device
- 310: First ring network
- 320: Second ring network
- 400: Optical transmission system

## Claims

1. A resource allocation device comprising:
a resource calculation means for deriving, based on a communication resource required in a communication between terminal stations opposing via a path, a communication resource required for the path, and calculating, based on a communication resource assignable to the path and the derived communication resource required for the path, a communication resource to be assigned to the path; and
an interface that transmits, to a communication device that sets a communication resource to the path, a communication resource to be assigned to the path.

2. The resource allocation device according to claim 1, wherein the resource calculation means calculates a communication resource to be assigned to each path between adjacent communication devices, among the terminal stations and the communication devices.

3. The resource allocation device according to claim 1 or 2, wherein the resource calculation means derives, for each pair of the opposing terminal stations, a communication resource to be assigned to the path.

4. The resource allocation device according to claim 3, wherein the resource calculation means calculates, in a path in which a sum of communication resources to be assigned to the path derived for each pair of the opposing terminal stations is largest, a communication resource to be assigned to the path in which the sum of communication resources to be assigned to the path is largest, based on a communication resource required for the path and a communication resource assignable to the path.

5. The resource allocation device according to claim 3 or 4, wherein the resource calculation means assigns, for each pair of the opposing terminal stations, a same communication resource to all paths via which the communication passes.

6. The resource allocation device according to any one of claims 1 to 5, wherein, when a communication resource assigned to one path is less than a communication resource assignable to the one path, the resource calculation means assigns a dummy signal to the one path.

7. The resource allocation device according to any one of claims 1 to 6, wherein
the resource calculation means assigns, for each logical topology indicating a connection relation of the terminal stations, a communication resource of a path via which a communication between the terminal stations passes, and
assigns the communication resource in such a way that a sum, for each of the paths, of amounts of the communication resources assigned for the each logical topology does not exceed an amount of a communication resource assignable to the path.

8. A resource allocation system comprising:
a plurality of terminal stations;
the resource allocation device according to any one of claims 1 to 7, being connected to at least one of the plurality of terminal stations; and
a communication device that sets a communication resource to a path between the terminal stations.

9. A resource allocation method comprising:
deriving, based on a communication resource required in a communication between terminal stations opposing via a path, a communication resource required for the path; and
calculating, based on a communication resource assignable to the path and the derived communication resource required for the path, a communication resource to be assigned to the path.

10. The resource allocation method according to claim 9, further comprising calculating a communication resource to be assigned to the path, for each path between a communication device and the terminal station adjacent to each other, among the communication devices that set a communication resource to the path, and the terminal stations.

11. The resource allocation method according to claim 9 or 10, further comprising deriving, for each pair of the opposing terminal stations, a communication resource to be assigned to the path.

12. The resource allocation method according to claim 11, further comprising calculating, in a path in which a sum of communication resources to be assigned to the path derived for each pair of the opposing terminal stations is largest, a communication resource to be assigned to the path in which the sum of communication resources to be assigned to the path is largest, based on a communication resource required for the path and a communication resource assignable to the path.

13. The resource allocation method according to claim 11 or 12, further comprising assigning, for each pair of the opposing terminal stations, a same communication resource to all paths via which the communication passes.

14. A recording medium recording a resource allocation program causing a computer of a resource allocation device to execute:
a procedure of deriving, based on a communication resource required in a communication between terminal stations opposing via a path, a communication resource required for the path;
a procedure of calculating, based on a communication resource assignable to the path and the derived communication resource required for the path, a communication resource to be assigned to the path; and
a procedure of transmitting, to a communication device that sets a communication resource to the path, a communication resource to be assigned to the path.
